# EUROPEAN PATENT APPLICATION

(11) **EP 1 209 393 A2**
(43) Date of publication of application: **29.05.2002**
(21) Application number: 01127622.7
(22) Date of filing: 20.11.2001
(51) Int. Cl.: F16K 31/40

(54) **Automatic isolating valve for gas pipelines with pneumatic servo control**

(30) Priority: 22.11.2000 IT VR000116; 21.08.2001 IT VR010048 U
(71) Applicant: MADAS S.r.l., 37048 San Pietro Di Legnago - Verona (IT)
(72) Inventor: Marangoni, Luigi, 37040 Terrazzo (Verona) (IT)
(74) Representative: Savi, Alberto

(57) **Abstract**

SUMMARY

The object of the valve according to the invention is to substantially reduce the electrical power required for operating the system by employing, in place of magnetic action, the force generated by the pressure produced by an air pump which is in its turn powered by electricity.
Valve (1) basically uses, in place of magnetic action, the force generated by the pressure produced by air pump (2) acting inside compartment (3) equipped with rubber membrane (4).
The valve is normally closed automatic with pneumatic servo control and with the possibility of regulating downstream pressure and opening time.

## Description

This industrial invention patent proposes an automatic isolating valve for gas pipelines and gas-fired appliances. This valve is normally closed, automatic, with pneumatic servo control which is in its turn electrically powered and with the possibility of regulating outlet pressure and opening time.

The invention in question consists of a valve that can be used with combustible gases of the first, second and third categories and with maximum 1 bar operating pressures.

The valve according to the invention, which is based on exploiting a pneumatic system, was conceived in full compliance with the safety, manufacturing and operating requirements specified by UNI EN 161 standards: "Automatic isolating valves for gas burners and gas-fired appliances".

The above-mentioned standards define an automatic isolating valve as "a valve conceived so that it opens the gas passage when it is energized and automatically closes it when it is de-energized".

Passage through the valve when it is closed is prevented by a mobile component called a valve plug which is kept in its open position when the valve is energized and closed, by the force of one or more springs, when the valve is de-energized.

A widely used method for bringing the valve plug to its open position is to exploit the force of a magnetic field generated by electrical current passing through a coil that is subject to voltage. This solution has the problem, however, of absorbing a substantial amount of power.

The valve according to the invention has as its object a substantial reduction in the electrical power required to operate the system and uses, in place of the magnetic action, the force generated by the pressure produced by an air pump which is in its turned electrically powered at 12-24V DC or 230V AC.

Other characteristics and special features of the invention can be better understood from the following description, given as a non-exclusive example, that refers to the accompanying drawings wherein:

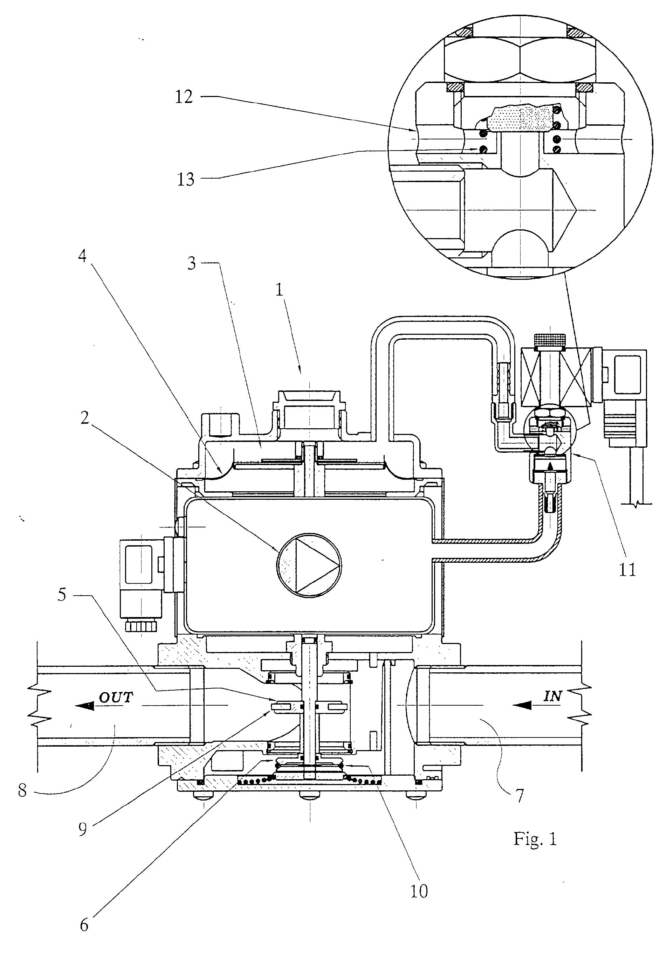

Fig. 1 schematically illustrates a valve according to the invention equipped with an air pump acting inside a special compartment equipped with a rubber membrane;
Fig. 2 is a schematic view of the valve in the previous drawing which is, in this case, equipped with a system that permits gas pressure downstream from the valve to be stabilized;
Fig. 3 schematically illustrates the valve in drawing 1 equipped in this case with a system that permits it to regulate valve plug opening time;
Fig. 4 is a schematic view of a valve made according to the criteria of a possible variation.

With reference to the accompanying drawings, number 1 denotes a valve according to the invention as a whole which, with the goal of substantially reducing the electrical power required to operate the system, uses, in place of the magnetic action, the force generated by the pressure produced by air pump 2 acting inside special compartment 3 equipped with rubber membrane 4.

The electrical power required for this solution is limited to the amount necessary for operating the pump and is equal to 8 Watts which is a value that, all other factors being equal, is equivalent to approximately 20% of the absorption of a valve with an exclusively electric drive.

The valve according to the invention has other advantages, in addition to the above, that are illustrated as follows.

The bottom part of the valve is equipped with two valve plugs of equal diameters 5 and 6 located at gas inlet duct 7 and gas outlet duct 8.

Upper valve plug 5 has flat NBR rubber seal element 9 and a sharp edge valve seat and lower valve plug 6 has NBR rubber expansion ring seal element 10 on which the thrust generated by the head from pump 2 is discharged.

This characteristic guarantees perfect and simultaneous closure of plugs 5 and 6 even in the presence of foreign matter and/or impurities.

The gas inlet pressure on aforesaid valve plugs 5 and 6 acts with forces in the opposite directions: this makes the force required to open the valve independent from the gas pressure, offering clear advantages in terms of reducing the necessary opening force especially when high inlet pressures are present.

Air pump 2, electrically powered at 12-24V DC or 230V AC, generates a rise in pressure in thrust chamber 3 equipped with NBR rubber membrane 4, consequently generating the force necessary to open valve plugs 5 and 6.

During this phase normally open electric valve 11 closes relief ducts 12 whereas lack of electrical power causes return spring 13 to bring electric valve 11 back to its normal position, permitting air to exit from thrust chamber 3 through relief ducts 12 and consequently permitting closure of valve plugs 5, 6.

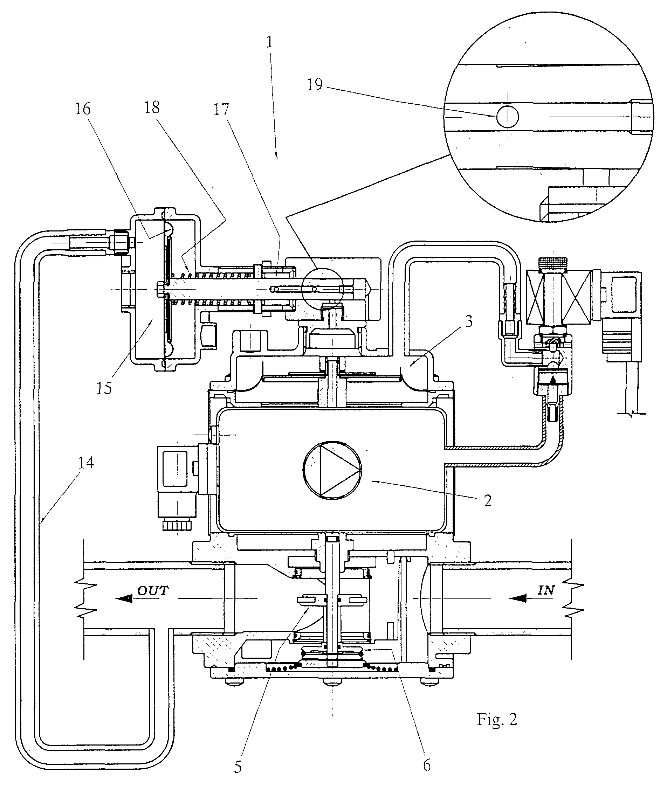

As illustrated in figure 2 valve 1 can be equipped with a system that permits to stabilize the gas pressure downstream from the valve. This system consists of duct 14 which connects the valve outlet to chamber 15 equipped with NBR rubber membrane 16 by regulating the pressure in thrust chamber 3.

The rise in gas pressure exiting from the valve generates a force in aforesaid chamber 15 whose effect is transmitted into thrust chamber 3 through pin 17 thus favoring opening of valve plugs 5 and 6.

Movement of pin 17 is contrasted by adjustable spring 18. Achievement of the situation of equilibrium between the opposite direction forces acting on membrane 16, one due to the pressure downstream from the valve and the other to adjustable spring 18, permits the gas outlet pressure to be stabilized at predetermined values. Any overpressures in thrust chamber 3 are discharged to the exterior through calibrated hole 19.

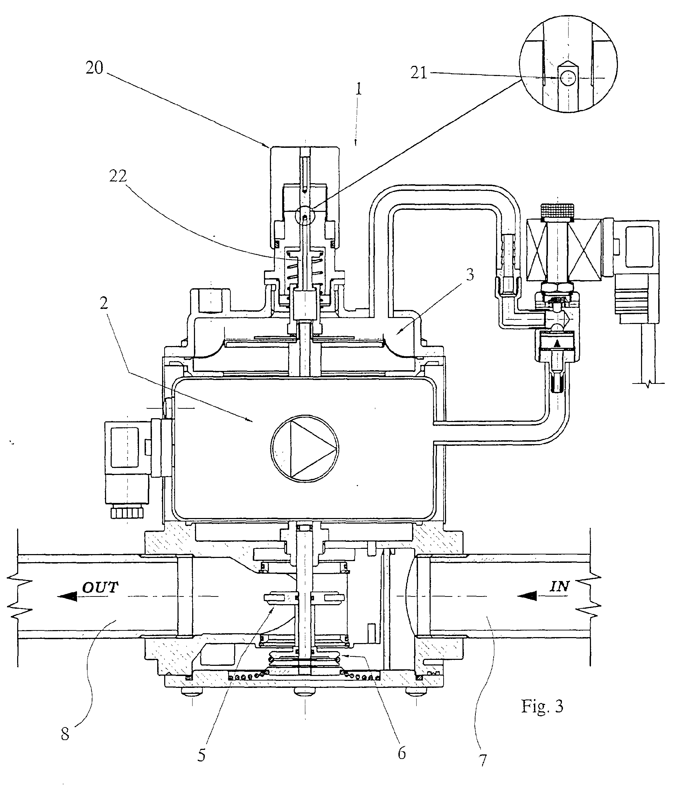

And finally the valve, and this is one of the most interesting and useful aspects of the invention, can be equipped with a system that permits regulation of valve plug opening times as illustrated in the cross-section in figure 3.

This system uses special regulating element 20 which, by suitably dosing of calibrated hole 21 located on shaft 22, causes slow or fast or intermediate opening of the valve plugs.

Slow opening is obtained through calibrated hole 21 which, connecting the exterior to thrust chamber 3, delays the chamber filling while thus reducing the force available to open the valve plugs.

Fast opening is but obtained by eliminating the connection between the exterior and thrust chamber 3 so that pump 2 quickly discharges its own head into thrust chamber 3.

And it is also possible to use an intermediate solution, partly shutting hole 21, communicating between the exterior and thrust chamber 3, by using adjustment element 20. This obtains, over the entire travel of the valve plugs, part with quick opening and part with slow opening.

The possibility exists for connecting two solenoid valves in series and equipped, respectively upstream and downstream with both systems meaning the system to stabilize gas pressure downstream from the valve and the system that permits regulation of valve plug opening times. This creates a single system where it is possible to stabilize the downstream pressure and to regulate opening time.

An alternative is also provided for where the solenoid valve uses, in place of the magnetic action generated by a coil that carries electrical current, the force generated by the pressure produced by an air pump in a special compartment equipped with a rubber membrane.

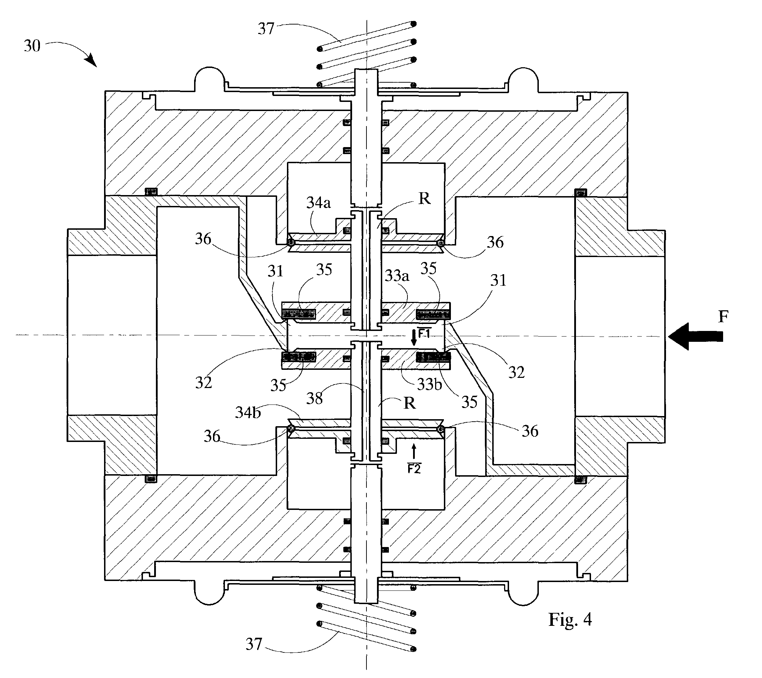

One perfection of the invention (fig. 4) is also provided for to further reduce absorbed power requirements. This perfection has the configuration of a single appliance composed of two normally closed solenoid valves with the possibility both of stabilizing downstream pressure and of regulating opening time and with the advantage of reducing longitudinal dimensions which are like the dimensions of a single solenoid valve rather than those of two solenoid valves in series.

According to this perfection valve body 30 has two seats, respectively indicated by numbers 31 and 32. The system of two equal diameter valve plugs is maintained for each of these, where the valve plugs are indicated in the figure by numbers 33 and 34 and letters A and B which distinguish the valve plugs for each seat.

Valve plugs 33 are equipped with NBR rubber flat seal element 35 and have a sharp edge valve seat while valve plugs 34 are equipped with NBR rubber expansion ring seal element 36.

The equal diameters of the valve plugs and the above-indicated characteristics of their seal elements offer the following advantages: perfect and simultaneous closure of valve plugs even in the presence of foreign matter and/or impurities;
system compensation due to the fact that, since the gas pressure acts with opposite direction forces on valve plugs 33 and 34, the force necessary to open the valve does not depend on the pressure of the gas.

The system described above, equipped, for each pair of valve plugs, with an electrically powered air pump and return springs 37 that bring the valve plugs back to their closed position in case of an electrical power failure, is totally equivalent to the series of two solenoid valves with mutually independent closure in both directions of gas flow.

More specifically it is supposed that the system is inserted in a gas burner supply manifold and that the flow of gas is directed as specified by arrow F in the figure: the valve with valve plugs 33A and 34A operates as the working valve meaning, when the burner starts to operate, that the air pump related to this valve is electrically powered and consequently the valve moves to its open position. In this case gas passage through the system is only possible if valve with valve plugs 33B and 34B is also open meaning if the air pump related to this valve also receives electrical consent from, for example, a thermostat or a pressure switch (safety valve),

The valve plugs of valve 33A - 34A, like those of valve 33B - 34B, are connected by fitting R where axial duct 38 is machined.

Note that system seal remains ensured even with valve 33A - 34A in its open position: the gas pressure, in fact, acts on valve plug 33B with force F1 and through duct 38 on valve plug 34B with force F2 which, given the already-illustrated compensation characteristics of the system, is equal to and contrary to F1.

An operating malfunction that cuts off electrical supply to one of the two valves will cause an immediate interruption in the flow of gas because the return spring of the valve that is no longer powered will bring it to its closed position.

An exam of the illustration makes it evident, given the symmetry of the system, that if the gas flow is in the direction contrary to the direction of the arrow then the working valve functions and safety valve functions can be inverted between the two valves while the system continues to operate in an identical manner to the previous case.

A technician in the sector can provide further modifications and variants to the automatic isolating valve as described and illustrated above, obtaining solutions that are to be held to fall within the scope of protection of the invention, further defined in its own particular characteristics by the following claims:

## Claims

1. Automatic isolating valve for gas pipelines and gas-fired appliances, normally closed, automatic, with pneumatic servo control which is in its turn electrically powered and with the possibility of regulating outlet pressure and opening time, **characterized by** the fact that system operation employs, in place of magnetic action, the force generated by the pressure produced by air pump (2) acting inside specific compartment (3) equipped with rubber membrane (4).

2. Automatic isolating valve as claimed in claim 1, **characterized by** the fact that the energy used to drive the valve is supplied by electrically-powered air pump (2) which pump (2) produces an increase in pressure in thrust chamber (3) equipped with NBR rubber or similar membrane (4).

3. Automatic isolating valve as claimed in claim 1, **characterized by** the presence of two valve plugs (5, 6) of equal diameter which are actuated by forces in opposite directions on upper valve plug (5) and lower valve plug (6) coming from the pressure of the gas entering the valve and creating, in this way, a situation whereby the force required to open the valve plugs is independent from the pressure of the gas entering the valve.

4. Automatic isolating valve as claimed in claims 1 and 3, **characterized by** the fact that aforesaid upper valve plug (5) is equipped with flat NBR rubber seal element (9) and a sharp edge valve seat and lower valve plug (6) has NBR rubber or similar expansion ring seal element (10) on which all the thrust generated by the head from pump (2) is discharged.

5. Automatic isolating valve as claimed in claim 1, **characterized by** the possibility of stabilizing the pressure exiting from the valve by regulating the pressure in thrust chamber (3).

6. Automatic isolating valve as claimed in claim 5, **characterized by** the fact that the possibility of stabilizing the pressure exiting from the valve is permitted by duct (14) which connects the valve outlet to chamber (15) equipped with NBR rubber or similar membrane (16) with an effect that is transmitted into thrust chamber (3) through pin (17), thus favoring opening of valve plugs (5, 6) and by the fact that movement of pin (17) is contrasted by adjustable spring (18).

7. Automatic isolating valve as claimed in claim 6, **characterized by** the fact that achievement of the situation of equilibrium between the opposed direction forces acting on aforesaid membrane (16), one due to the pressure downstream from the valve and the other to adjustable spring (18), permits the gas outlet pressure to be stabilized at predetermined values.

8. Automatic isolating valve according to claim 7, **characterized by** the fact that any overpressure in thrust chamber (3) is discharged to the exterior through relief (19) machined in pin (17).

9. Automatic isolating valve **characterized by** the possibility of regulating opening time using a system that exploits specific regulating element (20) which, by suitably dosing of calibrated hole (21) located on shaft (22) placed in contrast to spring (23), causes slow or fast or intermediate opening of the valve plugs.

10. Automatic isolating valve whereby a perfection calls for valve body (30) to have two seats (31, 32) where the system of two equal diameter valve plugs (33, 34) is maintained for each seat.

11. Perfection of an automatic isolating valve for gas ducts or the like as claimed in claim 10 **characterized by** the fact that aforesaid valve body (30) permits closure of gas flow in both directions.

12. Perfection of an automatic isolating valve for gas ducts or the like as claimed in claim 10 **characterized by** the fact that valve plugs (33) are equipped with NBR rubber flat seal element (35) and have a sharp edge valve seat while valve plugs (34) are equipped with NBR rubber expansion ring seal element (36).

13. Perfection of an automatic isolating valve for gas ducts or the like as claimed in claim 10 **characterized by** the fact that the system, which is equipped, for each pair of valve plugs, with an electrically powered air pump and return springs (37) that bring the valve plugs back to their closed position in case of an electrical power failure, is equivalent to the series of two solenoid valves with mutually independent closure in both directions of gas flow.

14. Perfection of an automatic isolating valve for gas ducts or the like as claimed in claim 10 **characterized by** the fact that the valve plugs of the first valve (33A - 34A), like those of the second valve (33B - 34B) are connected by fitting (R) where axial duct (38) is machined.

15. Perfection of an automatic isolating valve for gas ducts or the like as claimed in claim 10 **characterized by** the fact that said valve has the configuration of a single appliance composed of two normally closed solenoid valves and with the possibility both of stabilizing downstream pressure and of regulating opening time and with the advantage of reducing overall longitudinal dimensions which are like the dimensions of a single solenoid valve rather than those of two solenoid valves in series.
